# EUROPÄISCHE PATENTSCHRIFT

(11) **EP 3 963 614 B1**
(45) Veröffentlichungstag und Bekanntmachung des Hinweises auf die Patenterteilung: **05.06.2024**
(21) Anmeldenummer: 20721212.7
(22) Anmeldetag: 23.04.2020
(51) Int. Cl.: H01H 3/26

(54) **VERFAHREN ZUM DURCHFÜHREN EINE UMSCHALTUNG EINES LASTSTUFENSCHALTERS MITTELS EINES ANTRIEBSSYSTEMS UND ANTRIEBSSYSTEM FÜR EINEN LASTSTUFENSCHALTER**
METHOD FOR CARRYING OUT A SWITCHOVER OF AN ON-LOAD TAP CHANGER USING A DRIVE SYSTEM, AND DRIVE SYSTEM FOR AN ON-LOAD TAP CHANGER
PROCÉDÉ DE MISE EN OEUVRE D'UNE COMMUTATION DE CHANGEUR DE PRISES EN CHARGE AU MOYEN D'UN SYSTÈME D'ENTRAÎNEMENT ET SYSTÈME D'ENTRAÎNEMENT POUR UN CHANGEUR DE PRISES EN CHARGE

(30) Priorität: 15.05.2019 DE 102019112715
(43) Veröffentlichungstag der Anmeldung: 09.03.2022
(73) Patentinhaber: Maschinenfabrik Reinhausen GmbH, 93059 Regensburg (DE)
(72) Erfinder: PRÜSSING, Kathrin, 93055 Regensburg (DE); SCHMEISSER, Michael, 93059 Regensburg (DE); SCHIMBERA, Jürgen, 93053 Regensburg (DE)
(86) Internationale Anmeldenummer: PCT/EP2020/061283
(87) Internationale Veröffentlichungsnummer: WO 2020/229123

(56) Entgegenhaltungen:
- WO-A1-00/36621
- WO-A1-2008/024048
- WO-A1-2012/135209
- DE-A1- 4 214 431
- US-A1- 2014 167 529

## Beschreibung

Die Erfindung betrifft ein Verfahren zum Durchführen einer Umschaltung eines Laststufenschalters mittels eines Antriebssystems. Das Antriebssystem umfasst zumindest einen Motor, der auf eine Antriebswelle wirkt. Eine Steuervorrichtung und ein Gebersystem sind vorgesehen, wobei das Gebersystem direkt oder indirekt mit der Antriebswelle gekoppelt ist.

Ferner betrifft die Erfindung ein Antriebssystem für einen Laststufenschalter zur Durchführung des erfindungsgemäßen Verfahrens.

Ein Antrieb für einen Laststufenschalter ist, zum Beispiel, aus der deutschen Gebrauchsmusterschrift DE° 20 2010 011 521 U1 bekannt. In diesem Laststufenschalterantrieb ist ein Motor abgeordnet, der über Gestänge starr mit den entsprechenden Laststufenschaltern verbunden ist. Die Betätigung erfolgt mittels harter Verdrahtung, sprich durch Betätigung von Motorschützen, wird der Motor ein- bzw. ausgeschaltet. Über die Antriebswelle werden dann die Laststufenschalter betätigt. Einmal zusammengesetzt kann am Antrieb nichts mehr verändert werden. Dadurch wird der Antrieb starr und unflexibel. Einfachste Anpassungen erfordern komplexe Umbauten.

US 2014/167529 A1 und WO 2012/135209 A1 offenbart einen Laststufenschalter nach dem Reaktorschaltprinzip. Ein Antriebssystem bestehend aus einem Motor, einem Geber und einer Steuerung betätigt den Laststufenschalter. Der Geber ist dabei als Multi-Turn Absolute Encoder ausgestaltet und dient der Überwachung der Stufenstellung. Nach einem plötzlichen Spannungsabfall ermöglicht der Multi-Turn Absolute Encoder, dass die zuvor angefahrene Stufenstellung klar und eindeutig bestimmt werden kann.

WO 00/36621 A1 offenbart ein Antriebssystem für Lesitungsschalter mit einem Motor, einer Steuerung und einem Geber.

Laststufenschalter werden üblicherweise für die Regelung von Spannung in unterschiedliche Transformatoren eingesetzt. Für die Betätigung des Laststufenschalters wird ein Antriebssystem verwendet. Dabei ist ein an einem am Transformatorgehäuse angeordneter Motor über ein Gestänge mit dem Laststufenschalter verbunden. Durch die die Betätigung von elektromechanischen Schützen wird der Motor mit Energie versorgt. Je nach Verdrahtung wird der Motor derart betätigt, dass sich dessen Antriebswelle entweder in die eine oder andere Richtung dreht. Diese Art der Betätigung ist starr und damit unflexibel.

Es ist daher eine Aufgabe der vorliegenden Erfindung, ein verbessertes Konzept zum Antreiben eines Laststufenschalters anzugeben, durch welches die Flexibilität des Betriebs des Laststufenschalters und die Sicherheit bei der Umschaltung der Anzapfungen erhöht werden.

Diese Aufgabe wird durch ein Verfahren zur Durchführung einer Umschaltung eines Laststufenschalters mittels eines Antriebssystems gelöst, das die Merkmale des Anspruchs 1 umfasst.

Es ist ferner Aufgabe der vorliegenden Erfindung, ein Antriebssystem für einen Laststufenschalter anzugeben, durch das die Flexibilität des Betriebs des Laststufenschalters und die Sicherheit bei der Umschaltung der Anzapfungen erhöht werden.

Diese Aufgabe wird durch ein Antriebssystem für einen Laststufenschalter gelöst, das die Merkmale des Anspruchs 13 umfasst.

Zur Durchführung des erfindungsgemäßen Verfahrens zur Umschaltung eines Laststufenschalters ist ein Antriebssystem vorgesehen. Das Antriebssystem umfasst zumindest einen Motor, der auf eine Antriebswelle wirkt. Eine Steuervorrichtung ist mit einem Gebersystem kommunikativ verbunden, wobei das Gebersystem direkt oder indirekt mit der Antriebswelle gekoppelt ist. Das Verfahren zeichnet sich durch die Schritte aus, dass zunächst ein Signal zum Schalten des Laststufenschalters von der Steuervorrichtung empfangen wird. In einem nächsten Schritt wird mittels der Steuervorrichtung bestimmet, ob aus einer Aufwärtsrichtung oder Abwärtsrichtung auf eine aktuelle Anzapfung geschaltet wurde. Dann wird bestimmt, ob in Aufwärtsrichtung oder Abwärtsrichtung auf die nächste Anzapfung geschaltet werden soll. In einem folgenden Schritt wird, anhand der Bestimmung im vorangegangenen Schritt, eines von mehreren Fahrprofilen für das Antriebssystem des Laststufenschalters ausgewählt. Anhand des oder der ausgewählten Fahrprofile wird dann die Umschaltung durchgeführt. In einem abschließenden Schritt wird die Umschaltung mittels des Antriebssystems nach dem ausgewählten Fahrprofil durchgeführt und überwacht.

Mehrere Fahrprofile können, gemäß einer bevorzugten Ausführungsform der Erfindung, in der Steuervorrichtung hinterlegt werden. Der Steuervorrichtung kann, für die Hinterlegung der Fahrprofile, ein Speicher zugeordnet sein.

Der Betrieb der Umschaltung bei einem Laststufenschalter nach dem Konzept der Anwendung von mehreren Fahrprofilen hat den Vorteil, dass eine schonendere Umschaltung möglich ist, da die Umschaltung an die mechanischen Gegebenheiten des Laststufenschalters angepasst werden kann. Dadurch können auch mechanische Bauteile geschont werden. Zusätzlich kann die Umschaltung flexibel gestaltet werden. Weiterhin werden konstruktive Besonderheiten, wie Freiläufe im Wähler des Laststufenschalters mittels entsprechender Fahrprofile berücksichtigt.

Gemäß der Erfindung kann ein erstes mögliches Fahrprofil, eine Umschaltung des Laststufenschalters in eine Aufwärtsrichtung beschreiben. Dabei wird vor der Umschaltung bestimmt, ob von der Anzapfung auf die nächst höhere Anzapfung geschaltet wird. Bei der aktuellen Umschaltung wird bestimmt, ob von der nächst höheren Anzapfung auf die folgende noch höhere Anzapfung geschaltet werden soll.

Gemäß der Erfindung kann ein zweites mögliches Fahrprofil eine Umschaltung des Laststufenschalters in eine Abwärtsrichtung beschreiben. Dabei wird vor der Umschaltung bestimmt, ob von der Anzapfung auf die nächst niedere Anzapfung geschaltet wurde. Bei der aktuellen Umschaltung wird geprüft, ob von der nächst niederen Anzapfung auf die noch niederere Anzapfung geschaltet wird.

In beiden Fällen wird, durch das ausgewählte Fahrprofil, die Antriebswelle des Laststufenschalters um ein ganzzahliges Vielfaches von 180 Grad dreht. Bevorzugt dreht sich die Antriebswelle des Laststufenschalters um 180 Grad oder auch 360 Grad. Es kann auch sein, dass die Antriebswelle auch weiter als 360 Grad drehen kann. Je nach Schaltertyp und Antriebssystem wird die Antriebswelle gemäß einem entsprechenden Wert gedreht.

Gemäß einer möglichen Ausführungsform der Erfindung, kann ein drittes mögliches Fahrprofil eine Umschaltung des Laststufenschalters in eine Aufwärtsrichtung beschreiben. Dabei wird vor der Umschaltung geprüft, ob bei einer vorherigen Umschaltung von der Anzapfung auf die nächst niedrigere Anzapfung geschaltet wurde. Bei der aktuellen Umschaltung wird dann von der jetzigen niedrigeren Anzapfung wieder auf die höhere Anzapfung, unter Berücksichtigung eines Freilaufs des Laststufenschalters, geschaltet.

Gemäß einer möglichen Ausführungsform, kann ein viertes mögliches Fahrprofil eine Umschaltung des Laststufenschalters in eine Abwärtsrichtung beschreiben. Vor der Umschaltung wird geprüft, ob bei einer vorherigen Umschaltung von der Anzapfung auf die nächst höhere Anzapfung geschaltet wurde. Bei der aktuellen Umschaltung wird dann von der höheren Anzapfung wieder auf die niedere Anzapfung, unter Berücksichtigung eines Freilaufs des Laststufenschalters, geschaltet.

Die Fahrprofile sind derart gestaltet, dass sie die Antriebswellen um ein ganzzahliges Vielfaches von 180 Grad drehen. Hinzu kommt ein weiterer Winkelbetrag, um dem gedreht wird, damit der der Freilauf des Getriebes berücksichtigt wird. Je nach Schaltertyp und Antriebssystem wird die Antriebswelle gemäß einem entsprechenden Wert gedreht und der Wert des Freilaufs dazu addiert.

Gemäß einer möglichen weiteren Ausführungsform, kann ein fünftes Fahrprofil derart gestaltet werden, dass ein Fahrprofil von einer Anzapfung zu einer anzufahrenden ersten nächst höheren Anzapfung oder einer ersten nächst niederen Anzapfung mit mindestens einem weiteren Fahrprofil kombiniert wird. Aufgrund der Kombination kann mindestens eine weitere nächst höhere Anzapfung oder mindestens eine weitere nächst niedere Anzapfung angefahren werden. Die Zuweisung der Fahrprofile erfolgt vor der Inbetriebnahme des Antriebssystems.

Die aktuelle Anzapfung wird mittels der Steuervorrichtung bestimmt. Die bestimmte aktuelle Anzapfung dient zur Auswahl des erforderlichen Fahrprofils oder der erforderlichen Fahrprofile. Im Gegensatz zur allgemeinen erfinderischen Idee werden nicht nur die Richtungen zur Auswahl eines Fahrprofils verwendet, sondern auch die Stellungen des Laststufenschalters, sprich die Anszapfungen.

Jedes der Fahrprofile wird aus zwei Variablen gebildet und kann als eine Polynomfunktion n-ter Ordnung in einem zweidimensionalen kartesischen Koordinatensystem abgebildet werden.

Die abgespeicherten Fahrprofile können aus der Steuervorrichtung oder einer Steuereinheit des Antriebssystems abgerufen werden.

Das erfindungsgemäße Antriebssystem für einen Laststufenschalter zur Durchführung des Verfahrens umfasst eine Antriebswelle, welche das Antriebssystem mit dem Laststufenschalter verbindet. Einen Motor dient zum Antreiben der Antriebswelle. Ein Feedbacksystem ist dazu eingerichtet, eine Position der Antriebswelle zu bestimmen. Auf Basis der bestimmten Position wird ein Feedbacksignal erzeugt. Eine Steuervorrichtung ist dazu eingerichtet, abhängig von einem ausgewählten Fahrprofil und dem Feedbacksignal, auf den Betrieb des Motors einzuwirken.

Die Steuervorrichtung umfasst eine Steuereinheit und einen Leistungsteil. Das Leistungsteil dient zur Energieversorgung des Motors. Das mindestens eine Fahrprofil ist in einem Speicher des Leistungsteils hinterlegt. Die Steuereinheit wählt ein Fahrprofil aus, und das Leistungsteil wirkt entsprechend dem Fahrprofil auf den Motor.

Das verbesserte Konzept mit den Fahrprofilen beruht auf der Idee, dass bevor ein Laststufenschalter geschaltet bzw. betätigt wird ein Fahrprofil für das Antriebssystem ausgewählt wird, mit dem die Umschaltung durchgeführt wird. Dabei muss zunächst festgestellt werden, in welcher Stellung (Anzapfung) dieser vorher war und in welche Stellung (Anzapfung) geschaltet werden soll. So wird ein entsprechendes Fahrprofil für das Antriebssystem für die nächste Umschaltung ausgewählt.

Zusätzlich kann auch festgestellt werden, wo sich der Laststufenschalter in einem Schaltablauf befindet, sprich in welcher Stellung bzw. Stufenstellung (Anzapfung) dieser steht. Die Ergänzung der Schaltrichtungen mit der tatsächlichen Stellung kann in besonderen Fällen ebenfalls für die Auswahl eines Fahrprofils dienen. Durch die Auswahl eines auf einen speziellen Schaltschritt bzw. Umschaltung zugeschnittenen Fahrprofils wird die Sicherheit des gesamten Systems erhöht. Weiterhin werden mechanische Bauteile nicht unnötig beansprucht. Zusätzlich kann die Geschwindigkeit der Umschaltungen optimiert und, wenn möglich, sogar erhöht werden.

Das Wissen um die Schaltrichtungen (vergangene und zukünftige), in Verbindung mit der aktuellen Stufenstellung, ermöglicht es, ein optimal für die nächste Umschaltung gestaltetes Fahrprofil auszuwählen. Mechanische Freiläufe, Spiele und Besonderheiten im Betätigungsablauf werden so individuell berücksichtigt.

Gemäß wenigstens einer Ausführungsform der Erfindung, wird das Schaltsignal durch einen für die Regelung eines Stufentransformators benötigten Spannungsregler, manuelle Eingabe oder durch ein externes Signal ausgelöst.

Gemäß wenigstens einer Ausführungsform der Erfindung, weist die Steuervorrichtung einen Speicher auf in dem jedes Fahrprofil und die Zuordnung des Fahrprofils zu einem Schaltschritt sowie die aktuelle Stufenstellung gespeichert sind.

Gemäß wenigstens einer Ausführungsform der Erfindung, weist die Steuervorrichtung eine Steuereinheit und ein Leistungsteil auf, wobei in einem Speicher der Steuereinheit die Zuordnung des Fahrprofils zu einem Schaltschritt und die aktuelle Stufenstellung und in einem Speicher des Leistungsteils die Fahrprofile gespeichert sind.

Das Antriebssystem nach dem verbesserten Konzept ist in der Lage die Antriebswelle gezielt, sprich nach einem vorher ausgewählten Fahrprofil, anzutreiben. Das Fahrprofil gibt nicht nur eine Geschwindigkeit oder ein Drehmoment vor. Das Fahrprofil gibt vor, zu welchem Zeitpunkt oder bei welcher Position der Antriebswelle, welches Drehmoment oder welche Geschwindigkeit an der Antriebswelle umgesetzt wird. Durch die Nutzung derartiger Fahrprofile können gezielte Abschnitte einer Schaltung des Schalters beeinflusst werden. Über das Feedbacksignal wird die aktuelle Position der Antriebswelle, also Ist-Wert, mit der Fahrprofil verglichen, also Soll-Wert. Das System wird damit flexibel und sicher.

Die Begrifflichkeit der "Position der Antriebswelle" beinhaltet Messgrößen, aus denen die Position der Antriebswelle, gegebenenfalls innerhalb eines Toleranzbereichs, eindeutig bestimmt werden kann.

Gemäß wenigstens einer Ausführungsform, dient das Antriebssystem dazu, eine Welle des Schalters, Laststufenschalters oder eine entsprechende Komponente des Laststufenschalters anzutreiben. Dadurch wird der Laststufenschalter veranlasst, eine oder mehrere Operationen durchzuführen, beispielsweise, eine Umschaltung zwischen zwei Wicklungsanzapfungen eines Betriebsmittels oder Teile der Umschaltung, wie etwa eine Lastumschaltung, eine Wählerbetätigung oder eine Vorwählerbetätigung.

Gemäß wenigstens einer Ausführungsform, ist die Antriebswelle direkt oder indirekt, insbesondere über eines oder mehrere Getriebe, mit dem Laststufenschalter, insbesondere der Welle des Laststufenschalters, verbunden.

Gemäß wenigstens einer Ausführungsform, ist die Antriebswelle direkt oder indirekt, insbesondere über eines oder mehrere Getriebe, mit dem Laststufenschalter, insbesondere der Welle des Laststufenschalters, verbunden.

Gemäß wenigstens einer Ausführungsform, ist die Antriebswelle direkt oder indirekt, insbesondere über eines oder mehrere Getriebe, mit dem Motor, insbesondere einer Motorwelle des Motors, verbunden.

Gemäß wenigstens einer Ausführungsform, entspricht eine Position, insbesondere eine absolute Position, der Motorwelle, einer Position, insbesondere einer absoluten Position, der Antriebswelle. Das heißt, von der Position der Motorwelle lässt sich, gegebenenfalls innerhalb eines Toleranzbereichs, eindeutig auf die Position der Antriebswelle schließen.

Gemäß wenigstens einer Ausführungsform, beinhaltet das Einwirken ein Steuern, Regeln, Bremsen, Beschleunigen oder Anhalten des Motors. Das Regeln kann, beispielsweise, eine Positionsregelung, eine Geschwindigkeitsregelung, eine Beschleunigungsregelung oder eine Drehmomentregelung umfassen. Zumindest im Falle solcher Regelungen kann man davon sprechen, dass das Antriebssystem ein Servoantriebssystem darstellt.

Gemäß wenigstens einer Ausführungsform, umfasst das Antriebssystem eine Überwachungseinheit, welche dazu eingerichtet ist, anhand des Feedbacksignals, die eine oder mehreren Operationen des Schalters zu überwachen. Die Überwachung umfasst insbesondere eine Überwachung dahingehend, ob einzelne der Operationen oder Teile davon ordnungsgemäß, insbesondere innerhalb vordefinierter Zeitfenster, durchgeführt werden.

Gemäß wenigstens einer Ausführungsform, umfasst die Steuervorrichtung eine Steuereinheit und ein Leistungsteil zur gesteuerten oder geregelten Energieversorgung des Motors. Die Steuereinheit ist zur Ansteuerung des Leistungsteils eingerichtet. Im Leistungsteil ist mindestens ein Fahrprofil hinterlegt, welches aus zwei Variablen gebildet und als eine Polynomfunktion n-ter Ordnung in einem zweidimensionalen kartesischen Koordinatensystem abgebildet werden kann.

Gemäß wenigstens einer Ausführungsform, ist das Leistungsteil als Umrichter oder Servoumrichter ausgestaltet oder als äquivalente elektronische, insbesondere vollelektronische, Einheit für Antriebsmaschinen.

Gemäß verschiedener Ausführungsformen enthält die Steuervorrichtung das Feedbacksystem ganz oder teilweise.

Die absolute Position der Antriebswelle kann von der Steuervorrichtung, beispielsweise, verglichen werden. Bei einer signifikanten Abweichung kann die Steuervorrichtung eine Fehlermeldung ausgeben oder eine Sicherheitsmaßnahme einleiten.

Gemäß wenigstens einer Ausführungsform ist das Feedbacksystem dazu eingerichtet, eine Rotorposition des Motors zu ermitteln und einen Wert für die Position der Antriebswelle, in Abhängigkeit der Rotorposition, zu bestimmen.

Gemäß wenigstens einer Ausführungsform handelt es sich bei der Rotorposition um einen Winkelbereich, in dem sich ein Rotor des Motors befindet, gegebenenfalls, kombiniert mit einer Anzahl von vollständigen Rotationen des Rotors.

Je nach Ausgestaltung, insbesondere Polpaarzahl, des Rotors kann damit die Position oder absolute Position der Motorwelle bis auf mindestens 180° genau bestimmt werden, beispielsweise durch die Steuervorrichtung. Durch Untersetzung mittels einem oder mehrerer Getriebe, ist die dadurch erzielbare Genauigkeit der Position der Antriebswelle deutlich größer. Die Auswertung durch die Steuervorrichtung entspricht hier gewissermaßen einer virtuellen Geberfunktion. Auch bei einem vollständigen Ausfall eines Absolutwertgebers des Feedbacksystems kann daher wenigstens ein Notbetrieb aufrechterhalten werden und/oder der Laststufenschalter in eine sichere Position gebracht werden.

Gemäß wenigstens einer Ausführungsform beinhaltet das Feedbacksystem einen Absolutwertgeber, der dazu eingerichtet und angeordnet ist, die absolute Position der Antriebswelle oder eine absolute Position einer weiteren Welle, welche mit der Antriebswelle verbunden ist, zu erfassen und, basierend auf der erfassten Position, wenigstens ein Ausgangssignal zu erzeugen. Das Feedbacksystem ist dazu eingerichtet, einen Werte für die Position der Antriebswelle, anhand des wenigstens einen Ausgangssignals, zu ermitteln.

Gemäß wenigstens einer Ausführungsform ist der Absolutwertgeber direkt oder indirekt an der Motorwelle, der Antriebswelle oder einer damit gekoppelten Welle befestigt.

Gemäß wenigstens einer Ausführungsform umfasst der Absolutwertgeber einen Multiturn-Drehgeber oder Singleturn-Geber.

Gemäß wenigstens einer Ausführungsform ist der Absolutwertgeber dazu eingerichtet, die Position der Antriebswelle oder die Position der weiteren Welle, anhand eines Abtastverfahrens, zu erfassen.

Gemäß wenigstens einer Ausführungsform beinhaltet das Abtastverfahren ein optisches, ein magnetisches, ein kapazitives, ein resistives oder ein induktives Abtastverfahren.

Gemäß wenigstens einer Ausführungsform beinhaltet das Feedbacksystem eine Kombination aus einem Absolutwertgeber und einem Hilfskontakt, die in der Kombination dazu eingerichtet und angeordnet sind, die absolute Position der Antriebswelle oder eine absolute Position einer weiteren Welle, welche mit der Antriebswelle verbunden ist, zu erfassen und, basierend auf der erfassten Position, wenigstens ein Ausgangssignal zu erzeugen. Das Feedbacksystem ist dazu eingerichtet, einen Wert für die Position der Antriebswelle, anhand des wenigstens einen Ausgangssignals, zu ermitteln.

Gemäß wenigstens einer Ausführungsform, sind der Absolutwertgeber und der Hilfskontakt direkt oder indirekt an der Motorwelle, der Antriebswelle oder einer damit gekoppelten Welle befestigt.

Gemäß wenigstens einer Ausführungsform, ist der Absolutwertgeber als Singleturn-Drehgeber oder inkrementeller Geber oder virtueller Geber ausgeführt. Der Hilfskontakt ist als mindestens ein Mikroschalter oder Resolver oder Sin-Cos-Geber ausgeführt.

Gemäß wenigstens einer Ausführungsform, sind der Absolutwertgeber und der Hilfskontakt dazu eingerichtet die Position der Antriebswelle oder die Position der weiteren Welle, anhand eines Abtastverfahrens, zu erfassen.

Gemäß wenigstens einer Ausführungsform, beinhaltet das Abtastverfahren ein optisches, ein magnetisches, ein kapazitives, ein resistives es oder ein induktives Abtastverfahren.

Gemäß wenigstens einer Ausführungsform kann das Fahrprofil aus zwei Variablen gebildet und als eine Polynomfunktion n-ter Ordnung in einem zweidimensionalen kartesischen Koordinatensystem abgebildet werden.

Gemäß wenigstens einer Ausführungsform sind die Variablen direkte Größen oder indirekte Größen des Antriebssystems, beispielsweise, Zeit, Drehwinkel der Antriebswelle, Strom, Spannung, Geschwindigkeit, Drehmoment oder Beschleunigung.

Gemäß wenigstens einer Ausführungsform kann eine Variable durch jeweils eine Achse des Koordinatensystems abgebildet werden.

Gemäß wenigstens einer Ausführungsform kann die Steuervorrichtung auf einen zweiten Motor wirken.

Gemäß wenigstens einer Ausführungsform kann die Steuervorrichtung ein zweites Leistungsteil aufweisen, welches auf einen zweiten Motor wirkt.

Gemäß wenigstens einer Ausführungsform kann die Steuervorrichtung derart auf einen zweiten Motor wirken, dass dieser das Fahrprofil des Ist-Werts des Feedbacksystems des ersten Motors abfährt.

Gemäß wenigsten einer Ausführungsform weist der Laststufenschalter einen Lastumschalter und einen Wähler sowie einen Doppelwender oder einen Wender oder einen Vorwähler auf.

Im Folgenden werden die Erfindung und ihre Vorteile anhand der beigefügten schematischen Zeichnungen näher erläutert. Es zeigen:
- Figur 1: einen Antrieb für einen Laststufenschalter, mit dem zwischen den verschiedenen Anzapfungen eines Transformators geschalten werden kann;
- Figur 2: einen Verfahrensablauf für die Betätigung eines Laststufenschalters, gemäß dem verbesserten Konzept;
- Figur 3: eine schematische Darstellung eine Ausführungsform eines Laststufenschalters mit einem Antriebssystem, gemäß dem verbesserten Konzept;
- Figur 4a: ein Fahrprofil für das erfindungsgemäße Antriebssystem, das den Drehwinkel der Antriebswelle als Funktion des Zeit darstellt; und
- Figur 4b: ein Fahrprofil für das erfindungsgemäße Antriebssystem, welches das Drehmoment als Funktion des Drehwinkels der Antriebswelle darstellt.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken.

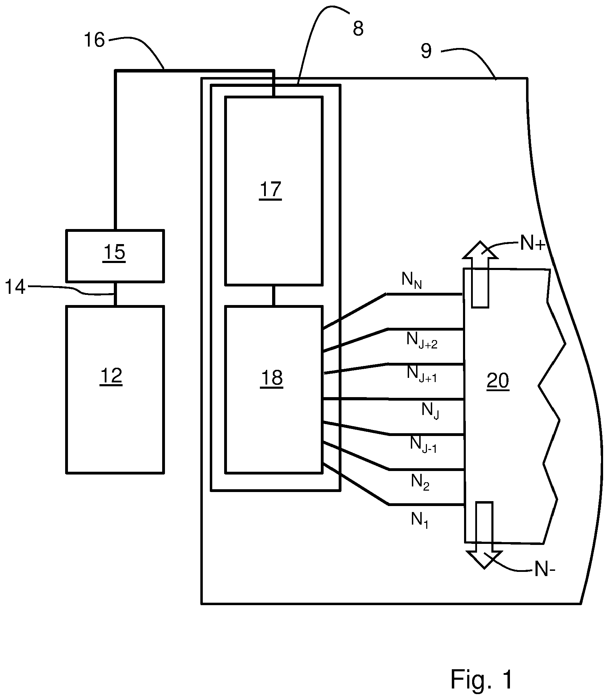

**Figur 1** zeig einen schematischen Aufbau des Zusammenwirkens eines Laststufenschalters 8 mit den Anzapfungen N₁, N₂,..., N_{N} einer Regelwicklung 20 eines Transformators 9. Für den Antrieb eines Wählers 18 und des Lastumschalters 17 ist ein Motor 12 vorgesehen, der über ein Getriebe 15 auf den Wähler 18 und den Lastumschalter 17, also den Laststufenschalter 8 wirkt. Über eine Motorwelle 14 und eine Antriebswelle 16 wirkt der Motor 12 auf den Laststufenschalter 8, um in einer Aufwärtsrichtung N+ von einer Anzapfung N_{J} auf die nächst höhere Anzapfung N_{J+1} oder in einer Abwärtsrichtung N- von einer Anzapfung N_{J} auf die nächst niedere Anzapfung N_{J-1} der Regelwicklung 20 des Transformators 9 zu schalten.

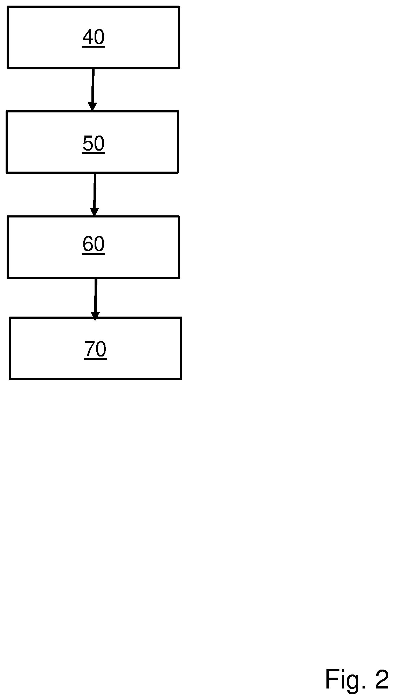

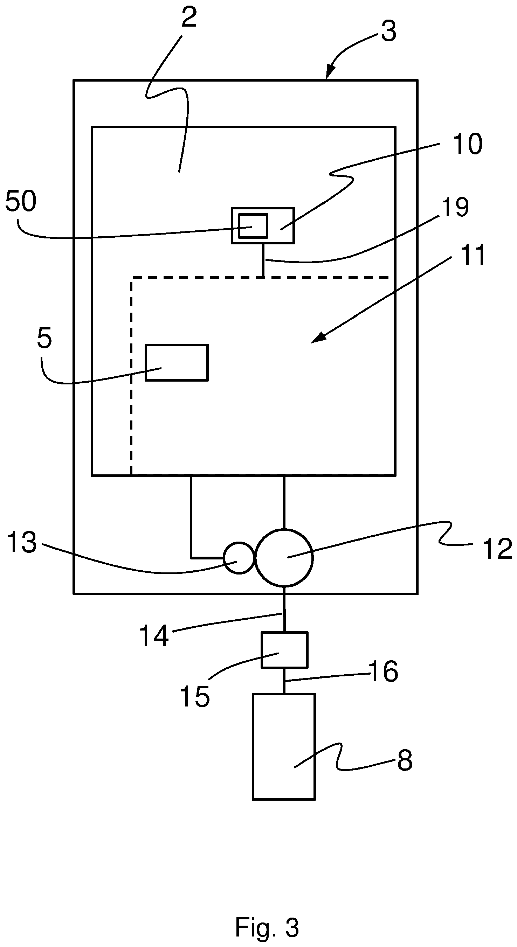

**Figur 2** zeigt ein Verfahrensablauf für die Betätigung des Laststufenschalters 8 mittels eines erfindungsgemäßen Antriebssystems 3 (siehe Figur 3). Im ersten Schritt 40 wird an die Steuervorrichtung 2 zunächst ein Signal zum "Schalten" gegeben. Dieses Signal wird durch einen Spannungsregler, ein Überwachungssystem oder durch manuelle Eingabe (hier nicht dargestellt) erzeugt. Das heißt, der Laststufenschalter 8 muss, beispielsweise, betätigt werden, um damit die Spannung des Transformators 9 (siehe Figur 1) anzupassen. Denkbar sind jedoch auch Justierfahrten während der Wartung, sprich eine Betätigung des Laststufenschalters 8 im Servicebetrieb. In der Steuervorrichtung 2 wird dann im nächsten Schritt 50 überprüft, in welche Richtung (Aufwärtsrichtung N+ oder Abwärtsrichtung N-) des Transformators 9 geschaltet wird, also in welche Anzapfung N₁, N₂,...,N_{N}) bzw. Stufenstellung. Weiterhin wird überprüft, aus welcher Richtung (Aufwärtsrichtung N+ oder Abwärtsrichtung N-), also welcher Stellung bzw. Stufenstellung, in die aktuelle Stellung (Anzapfung N_{J}) geschaltet wurde. Die Reihenfolge dieser Schritte ist beliebig. Im nächsten Schritt 60 wird ein dem Ergebnis entsprechendes Fahrprofil 22 ausgewählt und, mit diesem Fahrprofil 22, der Laststufenschalter 8 im dem folgenden Schritt 70 betätigt.

Dieses vereinfachte Verfahren erlaubt es einfache Laststufenschalter 8 mit nur zwei bzw. vier Fahrprofilen 22 zu betätigen.

Ein erstes mögliches Fahrprofil 22 beschreibt dabei eine Umschaltung des Laststufenschalters 8 in eine Aufwärtsrichtung N+, wenn zu Beginn nicht in eine Abwärtsrichtung N- geschaltet wurde. Mit anderen Worten, wurde vor der Umschaltung von der Anzapfung N_{J} auf die Anzapfung N_{J+1} geschaltet, und nun soll von der Anzapfung N_{J+1} auf die Anzapfung N_{J+2} geschaltet werden. Somit wird in dieselbe Richtung, also die Aufwärtsrichtung N+, geschaltet. Hierbei dreht sich die Antriebswelle 16 des Laststufenschalters 8 vorzugsweise um 180 Grad oder auch 360 Grad. Die Antriebswelle 16 kann sich jedoch auch weiter als 360 Grad drehen.

Das zweite mögliche Fahrprofil 22 beschreibt eine Umschaltung des Laststufenschalters 8 in die Abwärtsrichtung N-, wenn zu Beginn nicht in die entgegengesetzte Schaltrichtung geschaltet wurde. Mit anderen Worten, es wurde vor der Umschaltung von der Anzapfung N_{J+2} auf die Anzapfung N_{J+1} geschaltet, und nun soll auf die Anzapfung N_{J} geschaltet werden. Somit wird in dieselbe Richtung geschaltet. Hierbei dreht sich die Antriebswelle 16 vorzugsweise um 180 Grad oder auch 360 Grad. Die Antriebswelle 16 kann sich jedoch auch weiter als 360 Grad drehen.

Wenn, beispielsweise, mechanische Freiläufe (nicht dargestellt) im Laststufenschalter 8 eingebaut sind, die beim Wechseln von der Abwärtsrichtung N- in die Aufwärtsrichtung N+ oder umgekehrt (also von einer ersten Schaltrichtung in eine zweit Schaltrichtung, wobei diese entgegengesetzt zur ersten Schaltrichtung ist), müssen diese Freiläufe bei der Umschaltung berücksichtigt werden. Diese Freiläufe sind Bestandteile der mechanischen Systeme des Laststufenschalters 8, beispielsweise wegen Nachdrückeinrichtungen, im Federenergiespeicher oder im Wähler 18 verbaut. Hierfür wird ein drittes und ein viertes Fahrprofil 22 in der Steuervorrichtung 2 hinterlegt. Dieses Fahrprofil 22 hat Charakteristika, die sich von denen des ersten bzw. zweiten Fahrprofils 22 unterscheiden. Zum Beispiel, dreht sind die Antriebswelle 16 beim dritten und vierten Fahrprofil 22 um mehr Grad als beim ersten und zweiten Fahrprofil 22 der vorherigen Schaltung. Bei einer Umschaltung, die mit einer Drehung der Antriebswelle um 180 Grad durchgeführt wird, muss ein Betrag der den Freilauf berücksichtigt mit eingerechnet werden. Das Antriebssystem 3 dreht die Antriebswelle 16 dann um mehr als nur 180 Grad. Dabei wird der Anteil des Freilaufs zum grundsätzlichen Betrag der für die Durchführung einer Schaltung notwendig ist addiert. Sollte die darauffolgende Schaltung wieder in dieselbe Richtung (Abwärtsrichtung N- oder Aufwärtsrichtung N+) gehen, wird das entsprechende Fahrprofil 22 verwendet.

Das erste und zweite bzw. dritte und vierte Fahrprofil 22 können, bis auf ihre Vorzeichen, identisch ausgestaltet sein. Grundsätzlich können sich die Fahrprofile 22 in jeder Variable voneinander unterscheiden. Diese können, beispielsweise, schneller oder langsamer ablaufen. Diese können zum Teil identisch zu einander sein, jedoch um einen weiteren Abschnitt ergänzt werden.

Zusammengefasst wird das Fahrprofil 22 anhand der Schaltrichtung (Abwärtsrichtung N- oder Aufwärtsrichtung N+) der letzten Schaltung und der Schaltrichtung (Abwärtsrichtung N- oder Aufwärtsrichtung N+) der nächsten Schaltung ausgewählt.

Bei komplexeren Laststufenschaltern 8 muss jedoch auch die tatsächliche Stellung bzw. Stufenstellung der Anzapfung, in der sich der Laststufenschalter 8 befindet, berücksichtigt werden. In der Steuervorrichtung 2 wird dann zusätzlich in Schritt 50 überprüft, in welcher Stellung bzw. Stufenstellung der Anzapfung der Laststufenschalter 8 aktuell steht. Weiterhin wird überprüft, in welche Stellung bzw. auf welche Anzapfung geschaltet werden soll und aus welcher Stellung bzw. Anzapfung in die aktuelle Stellung geschaltet wurde. Die Reihenfolge dieser Schritte ist beliebig. Im nächsten Schritt 60 wird ein dem Ergebnis entsprechendes Fahrprofil 22 ausgewählt und, mit diesem Fahrprofil 22, der Laststufenschalter 8 im folgenden Schritt 70 betätigt.

Hier kann auch ein fünftes Fahrprofil 22 vorgesehen sein. Dieses kann bei sogenannten Durchlaufstellungen des Laststufenschalters 8 oder bei unsymmetrisch aufgebauten Laststufenschaltern 8 notwendig sein. Hier erkennt die Steuervorrichtung 2, dass die nächste Schaltung eine sogenannte Durchlaufstellung ist. Dies bedeutet, dass bei der mit dem Fahrprofil 22 anzufahrenden ersten Anzapfung N_{J+1} oder N_{J-1} nicht angehalten werden soll. Die ausgewählte und zu erreichende Anzapfung N_{J+X} oder N_{J-X} (X ist dem Betrag nach gleich oder größer 2), kann erst durch mindestens ein weiteres Fahrprofil 22 erreicht werden. Das Erkennen einer derartigen Umschaltung erfolgt, in dem der Schaltschritt von einer bestimmten Anzapfung N_{J} in eine andere bestimmte Anzapfung N_{J+X} oder N_{J-X} bzw. Schaltrichtung (Abwärtsrichtung N- oder Aufwärtsrichtung N+) mindestens einem weiteren Fahrprofil 22 zugewiesen wird. Diese Zuweisung erfolgt vor der Inbetriebnahme des Antriebssystems 3 und ist in einem Speicher 50 der Steuervorrichtung 2 bzw. Steuereinheit 10 hinterlegt. Auch dieses Fahrprofil 22 unterscheidet sich in seinen Charakteristika von dem ersten und dem zweiten Fahrprofil 22. Bei der sogenannten Durchlaufstellung muss sich die Antriebswelle 16 um ein Vielfaches öfter drehen, als bei einer normalen Umschaltung (von einer aktuellen Anzapfung N_{J} auf die Anzapfung N_{J+1} oder N_{J-1}) eines Laststufenschalters 8. Dieses Fahrprofil 22 ist also einer bestimmten Umschaltung zwischen zwei bestimmten Anzapfungen N_{J} und N_{J+X} oder N_{J} und N_{J-X} zugeordnet.

Prinzipiell erlaubt es die Kombination aus der Bestimmung der Schaltrichtungen (vergangene und zukünftige) und die tatsächliche Stellung bzw. Stufenstellung, um ein explizit auf diese Schaltung zugeschnittenes Fahrprofil 22 auszuwählen und durchzuführen.

**Figur** 3 zeigt eine schematische Darstellung einer beispielshaften Ausführungsform eines Antriebssystems 3 für einen Laststufenschalter 8. Das Antriebssystem 3 ist über eine Antriebswelle 16 mit dem Laststufenschalter 8 verbunden. Das Antriebssystem 3 beinhaltet einen Motor 12, welcher über eine Motorwelle 14 und, optional, über ein Getriebe 15 die Antriebswelle 16 antreiben kann. Eine Steuervorrichtung 2 des Antriebssystems 3 umfasst ein Leistungsteil 11, welches, beispielsweise, einen Umrichter zur gesteuerten oder geregelten Energieversorgung des Motors 12 enthält (nicht dargestellt). Eine Steuereinheit 10 ist zur Ansteuerung des Leistungsteils 11, beispielsweise, über einen Bus 19 verbunden. Das Antriebssystem 3 weist ein Gebersystem 13 auf, welches als Feedbacksystem 4 dient, oder ein Teil des Feedbacksystems 4 ist, und mit dem Leistungsteil 11 verbunden ist (nicht dargestellt). Ferner ist das Gebersystem 13 direkt oder indirekt mit der Antriebswelle 16 gekoppelt (nicht dargestellt).

Das Gebersystem 13 ist dazu eingerichtet, mindesten einen ersten Wert für eine Position, insbesondere eine Winkelposition, zum Beispiel eine absolute Winkelposition, der Antriebswelle 16 zu erfassen. Dazu kann das Gebersystem 13, beispielsweise, einen Absolutwertgeber, insbesondere Multi-Turn-Absolutwertgeber, umfassen, welcher an der Antriebswelle 16, der Motorwelle 14 oder einer anderen Welle, deren Position eindeutig mit der absoluten Position der Antriebswelle 16 verknüpft ist, befestigt sein. Die Position der Antriebswelle 16 aus der Position der Motorwelle 14 ist eindeutig bestimmbar, beispielsweise, über ein Übersetzungsverhältnis des Getriebes 15.

Das Feedbacksystem 4 ist dazu eingerichtet, einen Wert für die Position der Antriebswelle 16 zu erfassen.

Die Steuervorrichtung 2, insbesondere die Steuereinheit 11 und/oder das Leistungsteil 12, ist dazu eingerichtet, den Motor 12 zu steuern oder zu regeln, abhängig von einem Feedbacksignal, welches das Feedbacksystem 4, basierend auf dem Wert, erzeugt.

Das Leistungsteil 11 weist einen Speicher 5 mit hinterlegten Fahrprofilen 22 auf. Das Gebersystem 13, das als Feedbacksystem 4 verwendet wird, meldet dem Leistungsteil 11 die Position der Antriebswelle 16 und überwacht damit, ob die Antriebswelle 16 das Fahrprofil 22 richtig abfährt bzw. die vorgegebenen Parameter einhält.

Im Leistungsteil 11 sind mehrere Fahrprofile 22 hinterlegt. Über die Steuereinheit 11 wird eins der Fahrprofile 22 anhand des in Figur 1 beschriebenen Verfahrens ausgewählt.

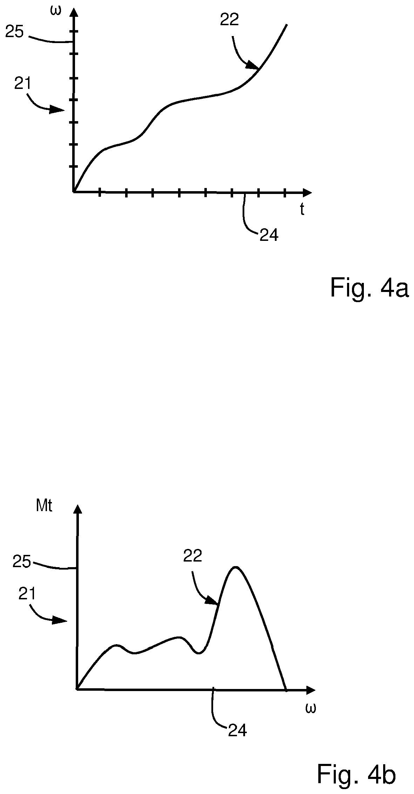

**Figuren 4a** und **4b** zeigen mögliche Fahrprofile 22 des Motors 12 für eine Schalthandlung des Laststufenschalters 8. Hier sind beispielhaft die Fahrprofile 22, jeweils als eine Polynomfunktion n-ter Ordnung mit zwei Variablen, welche in ein zwei dimensionales kartesisches Koordinatensystem 21 aufgetragen sind, gezeigt. Bei dem in Figur 4a gezeigtem Fahrprofil 22 ist auf der X-Achse 24 die Zeit t, sprich, wie lange die Antriebswelle 16 den Motor 12 betätigt, aufgetragen. Auf der Y-Achse 25 ist der Drehwinkel ω der Antriebswelle 16 aufgetragen. Die in Figur 4a auf den Achsen 24, 25 aufgetragen Größen sind lediglich Beispiele und sollen nicht als Beschränkung der Erfindung verstanden werden. Die auf der X-Achse 24 und der Y-Achse 25 aufgetragenen Variablen können direkte Größen oder indirekte Größen des Antriebssystems 3 sein. Direkte Größen können, beispielsweise, die Zeit t, ein Drehwinkel ω der Antriebswelle 16, Strom oder Spannung sein. Indirekte Größen können Geschwindigkeit, Drehmoment, Beschleunigung oder ähnliches sein.

Figur 4b zeigt ein mögliches Fahrprofil 22 des Motors 12 für eine Schalthandlung des Schalters 1. Hier ist die indirekte Größe des Drehmoments M(t) als Funktion des Drehwinkels ω aufgetragen und als eine Polynomfunktion n-ter Ordnung dargestellt. Bei dem in Figur 4b gezeigten Fahrprofil 22 ist auf der X-Achse 24 der Drehwinkel ω aufgetragen. Auf der Y-Achse 25 ist das auf die Antriebswelle 16 wirkende Drehmoment M(t) aufgetragen.

Das Fahrprofil 22 gibt einen Soll-Wert vor, den die Antriebswelle 16 abzufahren hat. Beim Abfahren des Fahrprofils 22 kann der Ist-Wert, der über das Feedbacksystem 4 erfasst wird, eine Abweichung vom Soll-Wert aufweisen. Abhängig von der vorgegebenen möglichen Abweichung des Ist-Werts vom Soll-Wert, kann das Wirken auf den Motor 16 entweder abgebrochen oder fortgeführt werden. Die Abweichung kann entweder manuell eingestellt werden oder mittels eines Einlernprozesses ermittelt werden.

### Bezugszeichen

- 2: Steuervorrichtung
- 3: Antriebssystem
- 4: Feedbacksystem
- 5: Speicher
- 8: Laststufenschalter
- 9: Transformator
- 10: Steuereinheit
- 11: Leistungsteil
- 12: Motor
- 13: Gebersystem
- 14: Motorwelle
- 15: Getriebe
- 16: Antriebswelle
- 17: Lastumschalter
- 18: Wähler
- 19: Bus
- 20: Regelwicklung
- 21: kartesisches Koordinatensystem
- 22: Fahrprofil
- 24: X-Achse
- 25: Y-Achse
- 40: Schritt
- 50: Schritt
- 60: Schritt
- 70: Schritt
- N+: Aufwärtsrichtung
- N-: Abwärtsrichtung
- N₁, N₂,...,N_{N}: Anzapfung
- T: Zeit
- M(t): Drehmoments
- ω: Drehwinkel

## Patentansprüche

1. Verfahren zur Durchführung einer Umschaltung eines Laststufenschalters (8) mittels eines Antriebssystems (3), wobei das Antriebssystem (3) zumindest einen Motor (12), der auf eine Antriebswelle (16) wirkt, eine Steuervorrichtung (2) und ein Gebersystem (13), das direkt oder indirekt mit der Antriebswelle (16) gekoppelt ist, umfasst; **gekennzeichnet durch** folgende Schritte:
- dass in einem ersten Schritt (40) ein Signal zum Schalten des Laststufenschalters (8) von der Steuervorrichtung (2); empfangen wird;
- dass in einem zweiten Schritt (50), mittels der Steuervorrichtung (2), bestimmt wird, ob aus einer Aufwärtsrichtung (N+) oder Abwärtsrichtung (N-) auf eine aktuelle Anzapfung (N_{J}) geschaltet wurde, und ob in Aufwärtsrichtung (N+) oder Abwärtsrichtung (N-) auf die nächste Anzapfung (N_{J+1}, N_{J-1}) geschaltet wird;
- dass in einem dritten Schritt (60), anhand der Bestimmung im zweiten Schritt (50), eines von mehreren Fahrprofilen (22) für das Antriebssystem (3) des Laststufenschalters (8) ausgewählt wird, anhand dessen die Umschaltung durchgeführt wird; und
- dass in einem vierten Schritt (70) die Umschaltung, mittels des Antriebssystems (3), nach dem ausgewählten Fahrprofil (22) durchgeführt und überwacht wird.

2. Verfahren nach Anspruch 1, wobei mehrere Fahrprofile (22) in der Steuervorrichtung (2) hinterlegt werden.

3. Verfahren nach einem der Ansprüche 1 oder 2, wobei ein erstes mögliches Fahrprofil (22) eine Umschaltung des Laststufenschalters (8) in eine Aufwärtsrichtung (N+) beschreibt, wobei vor der Umschaltung bestimmt wird, ob von der Anzapfung (N_{J}) auf eine nächst höher Anzapfung (N_{J+1}) geschaltet wurde, und bei der aktuellen Umschaltung von der nächst höheren Anzapfung (N_{J+1}) auf die folgende, noch höheren Anzapfung (N_{J+2}) geschaltet wird.

4. Verfahren nach einem der Ansprüche 1 oder 2, wobei ein zweites mögliches Fahrprofil (22) eine Umschaltung des Laststufenschalters (8) in eine Abwärtsrichtung (N-) beschreibt, wobei vor der Umschaltung bestimmt wird, ob von der Anzapfung (N_{J+2}) auf die nächst niedere Anzapfung (N_{J+1}) geschaltet wurde, und bei der aktuellen Umschaltung wird geprüft, ob von der nächst niederen Anzapfung (N_{J+1}) auf die noch niederere Anzapfung (N_{J}) geschaltet wird.

5. Verfahren nach einem der Ansprüche 3 oder 4, wobei durch die Fahrprofile (22) die Antriebswelle (16) um ein ganzzahliges Vielfaches von 180 Grad dreht.

6. Verfahren nach Anspruch 1, wobei ein drittes mögliches Fahrprofil (22) eine Umschaltung des Laststufenschalters (8) in eine Aufwärtsrichtung (N+) beschreibt, wobei vor der Umschaltung geprüft wird, ob von der Anzapfung (N_{J+1}) auf die nächst niedrigere Anzapfung (N_{J}) geschaltet wurde, und bei der aktuellen Umschaltung geprüft wird, ob wieder in die nächst höheren Anzapfung (N_{J+1}) von der Anzapfung (N_{J}), unter Berücksichtigung eines Freilaufs des Laststufenschalters (8), geschaltet wird.

7. Verfahren nach Anspruch 1, wobei ein viertes mögliches Fahrprofil (22) eine Umschaltung des Laststufenschalters (8) in eine Abwärtsrichtung (N-) beschreibt, wobei vor der Umschaltung geprüft wird, ob von der Anzapfung (N_{J+1}) auf die nächst höhere Anzapfung (N_{J+2}) geschaltet wurde, und bei der aktuellen Umschaltung geprüft wird, ob wieder in die nächst niederen Anzapfung (N_{J+1}) von der Anzapfung (N_{J+2}), unter Berücksichtigung eines Freilaufs des Laststufenschalters (8), geschaltet wird.

8. Verfahren nach einem der Ansprüche 6 oder 7, wobei durch die Fahrprofile (22) die Antriebswelle (16) um ein ganzzahliges Vielfaches von 180 Grad plus einem weiteren Winkelbetrag gedreht wird, um den Freilauf eines Getriebes (15) des Laststufenschalters (8) zu berücksichtigen.

9. Verfahren nach Anspruch 1, wobei ein fünftes Fahrprofil (22) derart gestaltet wird, dass ein Fahrprofil (22) von einer Anzapfung (N_{J}) zu einer anzufahrenden ersten nächst höheren Anzapfung (N_{J+1}) oder einer ersten nächst niederen Anzapfung (N_{J-1}) mit mindesten einem weiteren Fahrprofil (22) kombiniert wird, um mindestens eine weitere nächst höhere Anzapfung (N_{J+X}) oder mindestens eine weitere nächst niedere Anzapfung (N_{J-X}) anzufahren, wobei die Zuweisung der Fahrprofile (22) vor der Inbetriebnahme des Antriebssystems (3) erfolgt.

10. Verfahren nach einem der vorangehenden Ansprüche, wobei die aktuelle Anzapfung (N_{J}) mittels der Steuervorrichtung (2) bestimmt wird und der Auswahl der erforderlichen Fahrprofils (22) dient.

11. Verfahren nach einem der vorangehenden Ansprüche, wobei jedes Fahrprofil (22) aus zwei Variablen gebildet ist und als eine Polynomfunktion n-ter Ordnung in einem zweidimensionalen kartesischen Koordinatensystem (21) abgebildet werden kann.

12. Verfahren nach einem der vorangehenden Ansprüche, wobei die abgespeicherten Fahrprofile (22) aus der Steuervorrichtung (2) oder einem Leistungsteil (11) des Antriebssystems (3) abgerufen werden.

13. Antriebssystem (3) für einen Laststufenschalter (8) zur Durchführung eines Verfahrens nach einem der Ansprüche 1 - 12 umfassend:
- eine Antriebswelle (16), welche das Antriebssystem (3) mit dem Laststufenschalter (8) verbindet;
- einen Motor (12) zum Antreiben der Antriebswelle (16);
- ein Feedbacksystem (4), welches dazu eingerichtet ist, eine Position der Antriebswelle (16) zu bestimmen und, basierend auf dieser Position, ein Feedbacksignal zu erzeugen; und
- eine Steuervorrichtung (10), welche dazu eingerichtet ist, abhängig von einem ausgewählten Fahrprofil (22) und dem Feedbacksignal, auf den Betrieb des Motors (12) einzuwirken;
**dadurch gekennzeichnet, dass**
- die Steuervorrichtung (10) dazu ausgebildet und eingerichtet ist die Schritte aus Anspruch 1 durchzuführen.

14. Antriebssystem (3) nach Anspruch 13, wobei die Steuervorrichtung (2) eine Steuereinheit (10) und ein Leistungsteil (11) umfasst, wobei das Leistungsteil (11) zur Energieversorgung des Motors (12) dient und das mindestens eine Fahrprofil (22) in einem Speicher (5) des Leistungsteils (11) hinterlegt ist und die Steuereinheit (10) ein Fahrprofil (22) auswählt und das Leistungsteil (11) entsprechend dem Fahrprofil (22) auf den Motor (12) wirkt.

15. Antriebssystem (3) nach einem der Ansprüche 13 -14, wobei das Feedbacksystem (4) ein Gebersystem (13) umfasst, das dazu eingerichtet und angeordnet ist, die Position zumindest der Antriebswelle (16) zu erfassen.

16. Antriebssystem (3) nach Anspruch 15, wobei das Gebersystem (13) einen Absolutwertgeber und einen Hilfskontakt umfasst, die in Kombination dazu eingerichtet und angeordnet sind, die absolute Position zumindest der einen Antriebswelle (16) zu erfassen.

17. Antriebssystem (3) nach Anspruch 16, wobei der Absolutwertgeber und der Hilfskontakt direkt oder indirekt an der Motorwelle (14), der Antriebswelle (16) oder einer damit gekoppelten Welle befestigt sind.

18. Antriebssystem (3) nach Anspruch 16, wobei der Absolutwertgeber als Singleturn-Drehgeber oder inkrementeller Geber oder Virtueller-Drehgeber und der Hilfsschalter als mindestens ein Mikroschalter oder Resolver oder Sin-Cos-Geber ausgeführt sind.

19. Antriebssystem (3) nach einem der Ansprüche 16 - 18, wobei der Absolutwertgeber und der Hilfskontakt dazu eingerichtet sind, die Position der Antriebswelle (16) oder die Position der weiteren Welle anhand einer Abtastung zu erfassen.

## Claims

1. A method for carrying out a switchover of an on-load tap-changer (8) using a drive system (3), wherein the drive system (3) comprises at least one motor (12) which acts on a drive shaft (16), a control device (2) and an encoder system (13) which is directly or indirectly coupled to the drive shaft (16); **characterized by** the following steps:
- in a first step (40) a signal for switching the on-load tap-changer (8) is received from the control device (2);
- in a second step (50), it is determined by means of the control device (2) whether switching to a current tap (N_{J}) was performed from an upward direction (N+) or downward direction (N-), and whether switching will be performed to the next tap (N_{J+1}, N_{J-1}) in the upward direction (N+) or downward direction (N-);
- in a third step (60), on the basis of the determination in step (50), one of a plurality of travel profiles (22) is selected for the drive system (3) of the on-load tap-changer (8), on the basis of which the switchover is carried out; and
- in a fourth step (70) the switchover is carried out and monitored by means of the drive system (3) according to the selected travel profile (22).

2. The method as claimed in claim 1, wherein a plurality of travel profiles (22) are saved in the control device (2).

3. The method as claimed in one of claims 1 or 2, wherein a first possible travel profile (22) describes a switchover of the on-load tap-changer (8) in an upward direction (N+), wherein, before the switchover, it is determined whether the on-load tap-changer was switched from the tap (N_{J}) to a next higher tap (N_{J+1}), and, during the current switchover, whether to switch from the next higher tap (N_{J+1}) to the following even higher tap (N_{J+2}).

4. The method as claimed in one of claims 1 or 2, wherein a second possible travel profile (22) describes a switchover of the on-load tap-changer (8) in a downward direction (N-), wherein, before the switchover, it is determined whether a switch was performed from the tap (N_{J+2}) to the next lower tap (N_{J+1}), and, during the current switchover, it is checked whether to switch from the next lower tap (N_{J+1}) to the even lower tap (N_{J}).

5. The method as claimed in one of claims 3 or 4, wherein the travel profiles (22) rotate the drive shaft (16) by an integer multiple of 180 degrees.

6. The method as claimed in claim 1, wherein a third possible travel profile (22) describes a switchover of the on-load tap-changer (8) in an upward direction (N+), wherein, before the switchover, it is checked whether a switch was performed from the tap (N_{J+1}) to the next lower tap (N_{J}), and, during the current switchover, it is checked whether to switch back to the next higher tap (N_{J+1}) from the tap (N_{J}), taking into account a freewheel of the on-load tap-changer (8).

7. The method as claimed in claim 1, wherein a fourth possible travel profile (22) describes a switchover of the on-load tap-changer (8) in a downward direction (N-), wherein, before the switchover, it is checked whether a switch was performed from the tap (N_{J+1}) to the next higher tap (N_{J+2}), and, during the current switchover, it is checked whether to switch back to the next lower tap (N_{J+1}) from the tap (N_{J+2}), taking into account a freewheel of the on-load tap-changer (8).

8. The method as claimed in one of claims 6 or 7, wherein the travel profiles (22) rotate the drive shaft (16) by an integer multiple of 180 degrees plus a further angular amount to take into account the freewheel of a gear unit (15) of the on-load tap-changer (8).

9. The method as claimed in claim 1, wherein a fifth travel profile (22) is designed such that a travel profile (22) from a tap (N_{J}) to a first next higher tap (N_{J+1}) to be approached or a first next lower tap (N_{J-1}) is combined with at least one further travel profile (22), in order to approach at least one further next higher tap (N_{J+X}) or at least one further next lower tap (N_{J-X}), wherein the travel profiles (22) are assigned before the drive system (3) is put into operation.

10. The method as claimed in one of the preceding claims, wherein the current tap (N_{J}) is determined by means of the control device (2) and is used to select the required travel profile (22).

11. The method as claimed in one of the preceding claims, wherein each travel profile (22) is formed from two variables and can be represented as an nth-order polynomial function in a two-dimensional Cartesian coordinate system (21).

12. The method as claimed in one of the preceding claims, wherein the stored travel profiles (22) are retrieved from the control device (2) or a power section (11) of the drive system (3).

13. A drive system (3) for an on-load tap-changer (8) for carrying out a method as claimed in one of claims 1 - 12, said drive system comprising:
- a drive shaft (16) which connects the drive system (3) to the on-load tap-changer (8);
- a motor (12) for driving the drive shaft (16);
- a feedback system (4) which is configured to determine a position of the drive shaft (16) and, based on this position, to generate a feedback signal; and
- a control device (10) which is configured to act on the operation of the motor (12) depending on a selected travel profile (22) and the feedback signal;
**characterized in, that**
- the control device (10) is configured to perform the steps of claim 1.

14. The drive system (3) as claimed in claim 13, wherein the control device (2) comprises a control unit (10) and a power section (11), wherein the power section (11) is used to supply power to the motor (12) and the at least one travel profile (22) is saved in a memory (5) of the power section (11) and the control unit (10) selects a travel profile (22) and the power section (11) acts on the motor (12) according to the travel profile (22).

15. The drive system (3) as claimed in one of claims 13 -14, wherein the feedback system (4) comprises an encoder system (13) which is configured and arranged to detect the position of at least the drive shaft (16).

16. The drive system (3) as claimed in claim 15, wherein the encoder system (13) comprises an absolute encoder and an auxiliary contact, which in combination are configured and arranged to detect the absolute position of at least the one drive shaft (16).

17. The drive system (3) as claimed in claim 16, wherein the absolute encoder and the auxiliary contact are directly or indirectly attached to the motor shaft (14), the drive shaft (16) or a shaft coupled thereto.

18. The drive system (3) as claimed in claim 16, wherein the absolute encoder is embodied as a single-turn encoder or incremental encoder or virtual encoder and the auxiliary switch is embodied as at least one microswitch or resolver or sin-cos encoder.

19. The drive system (3) as claimed in one of claims 16 - 18, wherein the absolute encoder and the auxiliary contact are configured to detect the position of the drive shaft (16) or the position of the further shaft on the basis of a sampling.

## Revendications

1. Procédé pour effectuer une commutation d'un changeur de prises en charge (8) au moyen d'un système d'entraînement (3), le système d'entraînement (3) comprenant au moins un moteur (12) qui agit sur un arbre d'entraînement (16), un dispositif de commande (2) et un système de capteur (13) qui est couplé directement ou indirectement à l'arbre d'entraînement (16) ; **caractérisé par** les étapes suivantes :
- dans une première étape (40), un signal pour la commutation du changeur de prises en charge (8) est reçu par le dispositif de commande (2) ;
- dans une deuxième étape (50), il est déterminé, au moyen du dispositif de commande (2), si une commutation a été effectuée sur une prise actuelle (N_{J}) à partir d'une direction ascendante (N₊) ou d'une direction descendante (N₋), et si une commutation est effectuée sur la prise suivante (N_{J+1,} N_{J-1}) dans la direction ascendante (N₊) ou dans la direction descendante (N₋) ;
- dans une troisième étape (60), à l'aide de la détermination de la deuxième étape (50), l'un de plusieurs profils de conduite (22) pour le système d'entraînement (3) du changeur de prises en charge (8) est sélectionné, à l'aide duquel la commutation est effectuée ; et
- dans une quatrième étape (70), la commutation est effectuée et surveillée, au moyen du système d'entraînement (3), selon le profil de conduite sélectionné (22).

2. Procédé selon la revendication 1, dans lequel plusieurs profils de conduite (22) sont enregistrés dans le dispositif de commande (2).

3. Procédé selon l'une quelconque des revendications 1 ou 2, dans lequel un premier profil de conduite possible (22) décrit une commutation du changeur de prises en charge (8) dans une direction ascendante (N+) ; avant la commutation, il étant déterminé si une commutation a été effectuée de la prise (N_{J}) à une prise immédiatement supérieure (N_{J+1}) et, lors de la commutation actuelle, une commutation étant effectuée de la prise immédiatement supérieure (N_{J+1}) à la prise suivante, encore plus supérieure (N_{J+2}).

4. Procédé selon l'une quelconque des revendications 1 ou 2, dans lequel un deuxième profil de conduite possible (22) décrit une commutation du changeur de prises en charge (8) dans une direction descendante (N₋) ; avant la commutation, il étant déterminé si une commutation a été effectuée de la prise (N_{J+2}) à la prise immédiatement inférieure (N_{J+1}) et, lors de la commutation actuelle, il étant vérifié si une commutation est effectuée de la prise immédiatement inférieure (N_{J+1}) à la prise encore plus inférieure (N_{J}).

5. Procédé selon l'une quelconque des revendications 3 ou 4, dans lequel les profils de conduite (22) font tourner l'arbre d'entraînement (16) d'un multiple entier de 180 degrés.

6. Procédé selon la revendication 1, dans lequel un troisième profil de conduite possible (22) décrit une commutation du changeur de prises en charge (8) dans une direction ascendante (N₊) ; avant la commutation, il étant vérifié si une commutation a été effectuée de la prise (N_{J+1}) à la prise immédiatement inférieure (N_{J}), et, lors de la commutation actuelle, il étant vérifié si une commutation est effectuée à nouveau vers la prise immédiatement supérieure (N_{J+1}) à partir de la prise (N_{J}), en tenant compte d'une roue libre du changeur de prises en charge (8).

7. Procédé selon la revendication 1, dans lequel un quatrième profil de conduite possible (22) décrit une commutation du changeur de prises en charge (8) dans une direction descendante (N₋) ; avant la commutation, il étant vérifié si une commutation a été effectuée de la prise (N_{J+1}) à la prise immédiatement supérieure (N_{J+2}) et, lors de la commutation actuelle, il étant vérifié si une commutation est à nouveau effectuée vers la prise immédiatement inférieure (N_{J+1}) à partir de la prise (N_{J+2}), en tenant compte d'une roue libre du changeur de prises en charge (8).

8. Procédé selon l'une quelconque des revendications 6 ou 7, dans lequel les profils de conduite (22) font tourner l'arbre d'entraînement (16) d'un multiple entier de 180 degrés plus une autre valeur angulaire pour tenir compte de la roue libre d'une transmission (15) du changeur de prises en charge (8).

9. Procédé selon la revendication 1, dans lequel un cinquième profil de conduite (22) est conçu de telle sorte qu'un profil de conduite (22) d'une prise (N_{J}) à une première prise immédiatement supérieure (N_{J+1}) ou à une première prise immédiatement inférieure (N_{J-1}) à desservir est combiné avec au moins un autre profil de conduite (22) pour desservir au moins une autre prise immédiatement supérieure (N_{J+X}) ou au moins une autre prise immédiatement inférieure (N_{J-X}), l'attribution des profils de conduite (22) ayant lieu avant la mise en service du système d'entraînement (3).

10. Procédé selon l'une quelconque des revendications précédentes, dans lequel la prise actuelle (N_{J}) est déterminée au moyen du dispositif de commande (2) et sert à sélectionner les profils de conduite (22) nécessaires.

11. Procédé selon l'une quelconque des revendications précédentes, dans lequel chaque profil de conduite (22) est formé de deux variables et peut être représenté par une fonction polynomiale d'ordre n dans un système de coordonnées cartésiennes à deux dimensions (21).

12. Procédé selon l'une quelconque des revendications précédentes, dans lequel les profils de conduite (22) enregistrés sont appelés à partir du dispositif de commande (2) ou d'une partie de puissance (11) du système d'entraînement (3).

13. Système d'entraînement (3) pour un changeur de prises en charge (8) pour effectuer un procédé selon l'une quelconque des revendications 1 à 12 comprenant :
- un arbre d'entraînement (16) reliant le système d'entraînement (3) au changeur de prises en charge (8) ;
- un moteur (12) pour entraîner l'arbre d'entraînement (16) ;
- un système de rétroaction (4) adapté pour déterminer une position de l'arbre d'entraînement (16) et pour générer un signal de rétroaction sur la base de cette position ; et
- un dispositif de commande (10) adapté pour agir sur le fonctionnement du moteur (12) en fonction d'un profil de conduite (22) sélectionné et du signal de rétroaction ;
**caractérisé en ce que**
- le dispositif de commande (10) est configuré et adapté pour effectuer les étapes selon la revendication 1.

14. Système d'entraînement (3) selon la revendication 13, dans lequel le dispositif de commande (2) comprend une unité de commande (10) et une partie de puissance (11), la partie de puissance (11) servant à l'alimentation en énergie du moteur (12) et l'au moins un profil de conduite (22) étant enregistré dans une mémoire (5) de la partie de puissance (11) et l'unité de commande (10) sélectionnant un profil de conduite (22) et la partie de puissance (11) agissant sur le moteur (12) conformément au profil de conduite (22).

15. Système d'entraînement (3) selon l'une quelconque des revendications 13 à 14, dans lequel le système de rétroaction (4) comprend un système de capteur (13) qui est adapté et agencé pour détecter la position d'au moins l'arbre d'entraînement (16).

16. Système d'entraînement (3) selon la revendication 15, dans lequel le système de capteur (13) comprend un codeur absolu et un contact auxiliaire qui, en combinaison, sont adaptés et agencés pour détecter la position absolue d'au moins l'arbre d'entraînement (16).

17. Système d'entraînement (3) selon la revendication 16, dans lequel le codeur absolu et le contact auxiliaire sont fixés directement ou indirectement à l'arbre du moteur (14), à l'arbre d'entraînement (16) ou à un arbre qui y est couplé.

18. Système d'entraînement (3) selon la revendication 16, dans lequel le codeur absolu est réalisé sous forme de capteur de rotation monotour ou de capteur de rotation incrémental ou de capteur de rotation virtuel et le contact auxiliaire est réalisé sous la forme d'au moins un microrupteur ou un résolveur ou un capteur sin-cos.

19. Système d'entraînement (3) selon l'une quelconque des revendications 16 à 18, dans lequel le codeur absolu et le contact auxiliaire sont adaptés pour détecter la position de l'arbre d'entraînement (16) ou la position de l'autre arbre à l'aide d'un balayage.
